# EUROPÄISCHE PATENTSCHRIFT

(11) **EP 2 181 796 B1**
(45) Veröffentlichungstag und Bekanntmachung des Hinweises auf die Patenterteilung: **19.12.2012**
(21) Anmeldenummer: 09013710.0
(22) Anmeldetag: 30.10.2009
(51) Int. Cl.: B23K 9/02, B23K 9/18, B23K 9/32

(54) **Vorrichtung und Verfahren zum Unterpulverschweissen mit Lichtbogen mit einem eine Pulverzuführleitung und eine Pulverabführleitung aufweisenden Pulvergehäuse**
Device and method for submerged arc welding with a powder housing comprising powder feeding and exhaust ports
Dispositif et procédé de soudage à l'arc sous flux en poudre avec une chambre ayant une entrée et une sortie pour la poudre

(30) Priorität: 30.10.2008 DE 102008056281
(43) Veröffentlichungstag der Anmeldung: 05.05.2010
(73) Patentinhaber: Kjellberg Finsterwalde Schweißtechnik und Verschleißschutzsysteme GmbH, 58453 Witten (DE)
(72) Erfinder: Jüngling, Ronald, 03238 Massen (DE); Krink, Volker, 03238 Finsterwalde (DE); Kloshek, Alexander, 04895 Brottewitz (DE); Michailov, Vesselin, 03055 Cottbus (DE)
(74) Vertreter: Pfenning, Meinig & Partner GbR

(56) Entgegenhaltungen:
- FR-A- 1 262 252
- JP-A- 58 020 379
- US-A- 4 414 459
- DATABASE WPI Week 199040 Thomson Scientific, London, GB; AN 1990-303401 XP002567691 -& SU 1 547 993 A1 (PATON ELECTROWELD IND) 7. März 1990 (1990-03-07)
- DATABASE WPI Week 198935 Thomson Scientific, London, GB; AN 1989-254201 XP002567692 -& SU 1 459 852 A1 (LENGD ELEKTRIK WKS) 23. Februar 1989 (1989-02-23)
- DATABASE WPI Week 197608, Derwent Publications Ltd., London, GB; AN 1976-14412X, XP002567693 -& SU 469 554 A1 (PATON ELECTROWELD IND) 05 Mai 1975

## Beschreibung

Die Erfindung betrifft eine Vorrichtung und ein Verfahren zum Unterpulverschweißen mit Lichtbogen gemäß dem Oberbegriff der Ansprüche 1 und 9 (siehe, z.B. SU 469 554). Das Unterpulverschweißen wird zum Auftrags- und zum Verbindungsschweißen vielseitig eingesetzt. Es handelt sich um ein Lichtbogenschweißverfahren, bei dem der Lichtbogen zwischen einer abschmelzenden Schweißelektrode und dem zu schweißenden Werkstück in einer vom geschmolzenen Schweißpulver abgedeckten Schlackenblase, der Schweißkaverne, ausgebildet wird. Als Schweißzusatz dienen Schweißelektroden in Form von Drähten oder Bändern, sowie verschiedene Schweißpulver.

Die nachführbare Draht- oder Bandelektrode wird durch ein Vorschubsystem zur Schweißposition eines Bearbeitungsbereichs am Werkstück, die sich unter einer Pulverschicht befindet, gefördert. Das Schweißpulver gelangt normalerweise aus einem oberhalb des Schweißkopfes angeordneten Vorratsbehälter mittels Schwerkraft zur Schweißposition. Ein Stromkontaktrohr überträgt den elektrischen Schweißstrom auf die jeweilige Schweißelektrode. Während des Schweißvorganges schützt die gebildete Schlacke den Lichtbogen und das flüssige Schweißgut vor Einflüssen der Atmosphäre.

Nachteilig ist es dabei, dass es fast ausschließlich zum Schweißen in den Positionen PA und PB nach DIN EN ISO 6947, das heißt nur in ebenerdigen oder leicht geneigten Positionen geeignet ist. Das Schweißen in anderen Positionen, wie zum Beispiel überkopf, steigend (PF) und fallend (PG) ist nicht möglich. Die einzige Ausnahme stellt die Position PC (quer) dar, die aber nur mit einer aufwändigen Hilfskonstruktion realisiert werden kann. Das auf der Schweißnaht nach dem Schweißprozess verbleibende, überschüssige nicht aufgeschmolzene Schweißpulver muss wieder entfernt, z.B. abgesaugt werden.

Für das Schweißen an Positionen, die über dem Pulvervorratsbehälter liegen, oder um größere Entfernungen zwischen Pulverbehälter und Schweißstelle überbrücken zu können, besteht die Möglichkeit Druckluftfördersysteme einzusetzen. Auch hier muss nach dem Schweißprozess das auf der Schweißnaht verbleibende, überschüssige und nicht aufgeschmolzene Schweißpulver wieder entfernt werden. Auch diese Verfahrensvariante ist nur zum Schweißen in den üblichen Positionen geeignet.

Ein weiterer Nachteil beider Verfahrensvarianten ist es, dass das Schweißpulver auch ohne vorhandenes Werkstück weiter gefördert wird und dadurch Pulververluste auftreten.

Für das Unterpulverschweißen auch in anderen Positionen ist es aus DE 38 91 330 T1 bekannt, das Schweißpulver mit Hilfe mechanischer Förderer, beispielsweise Schnecken zur Schweißstelle zu befördern. Bei dieser Überkopfschweißeinrichtung ist ein auf einer Achse gelenkig angeordneter Bunker für das Schweißpulver vorhanden. Der Bunker ist mit einer Schale ausgestattet, die mit ihrem offenen Teil dem zu schweißenden Werkstück zugekehrt ist. In ihr ist ein durch einen gesteuerten Motor angetriebener Schneckenförderer zum Zuführen und Andrücken des Schweißpulvers integriert. Durch die Schale führt ein Schweißmundstück hindurch, in dessen Nähe über der oberen Oberfläche des offenen Teiles der Schale eine Nahtformeinrichtung angeordnet ist. Mit dem gesteuerten Antrieb des Schneckenförderers ist ein Geber für die Schweißpulverhöhe verbunden, der die Drehzahl der Schnecke innerhalb einer vorgegebnen Zeitspanne ändert. Der Geber der Schweißpulverhöhe befindet sich am in Schweißvorschubachsrichtung vorderen Rand der Schale in der Nähe der Längsachse derselben und ist in Form eines Wirbelstromwandlers ausgeführt. Die Einrichtung überwacht und hält die vorgegebene Schweißpulverhöhe dank der vorhandenen Steuerung des angetriebenen Schneckenförderers konstant, indem sie jeweils eine bestimmte Schweißpulvermenge in die Schale zuführt.

Dies hat den Nachteil, dass der Pulvervorratsbehälter mitgeführt wird, was zu einer großen Bauform und Masse der Anlage führt und damit die Flexibilität einschränkt. Weiterhin ist sie ausschließlich zum Überkopfschweißen einsetzbar.

Aus FR 1 262 252 A2 ist eine weitere Vorrichtung zum Unterpulverschweißen bekannt, bei der ein Schweißkopf mit einem Pulvergehäuse eingesetzt wird. Pulver gelangt über eine Leitung aus einem Pulverbehälter in das Pulvergehäuse in dem das Schweißen durchgeführt wird. Aus dem Pulvergehäuse wird es über eine weitere Leitung in den Pulverbehälter zurück geführt. An diese Leitung ist eine Leitung mit der ein erhöhter Druck in dieser Leitung erreicht wird, angeschlossen. Pulver wird so unter Nutzung des Venturieffektes aus dem Pulvergehäuse abgeführt und mit erhöhtem Druck in den Pulverbehälter gefördert.

Die JP 58 020379 A und SU 1 547 993 A1 betreffen ebenfalls jeweils eine Vorrichtung zum Unterpulverschweißen, bei der ein Pulver auf eine Oberfläche zugeführt wird.

Aufgabe der Erfindung ist es, das Unterpulverschwei-βen mit Lichtbogen flexibel und für alle Schweißpositionen einsetzen zu können.

Erfindungsgemäß wird diese Aufgabe mit einer Vorrichtung, die die Merkmale des Anspruchs 1 aufweist, gelöst. Dabei kann mit einem Verfahren gemäß Anspruch 9 gearbeitet werden. Vorteilhafte Ausgestaltungen und weiterbildungen der Erfindung können mit in untergeordneten Ansprüchen bezeichneten Merkmalen erreicht werden.

Ausgehend von bekannten technischen Lösungen sind auch bei der Erfindung eine nachführbare Schweißelektrode, die durch einen Schweißkopf geführt ist, und das Werkstück an eine Schweißstromquelle angeschlossen. Zwischen beiden wird ein Lichtbogen ausgebildet, der zumindest bereichsweise im Schweißpulver brennt. Bei der Erfindung ist aber ein Teil des Schweißkopfes mit Schweißelektrode innerhalb eines Pulvergehäuses angeordnet. Das Pulvergehäuse ist bis auf die zum Werkstück weisende'Seite ansonsten geschlossen. In Richtung auf zu bearbeitende Werkstücke ist eine ausreichend große Öffnung vorhanden. An das Pulvergehäuse ist eine Pulverzuführ- und eine Pulverabführleitung angeschlossen. An die Pulverabführleitung ist eine einen Unterdruck erzeugende Einrichtung angeschlossen. So kann Schweißpulver der Pulverkammer zugeführt werden. Überschüssiges Schweißpulver gelangt mit Hilfe von Unterdruck über die Pulverabführleitung wieder aus dem Pulvergehäuse und kann wieder eingesetzt werden, da eine Kreislaufführung möglich ist.

Es ist ein Pulverauffangbehälter vorhanden, in den aus dem Pulvergehäuse abgeführtes Schweißpulver transportiert wird. Von dort gelangt es in einen Pulvervorratsbehälter und aus diesem über die Pulverzuführleitung wieder in das Pulvergehäuse zurückgeführt werden. Am Pulvergehäuse sind Anschlüsse für die Pulverzuführ- und die Pulverabführleitung vorhanden. Beide Leitungen sollten flexibel, beispielsweise als Schläuche ausgebildet sein.

Die Anschlüsse sollten sich diametral am Pülvergehäuse gegenüberliegend angeordnet sein, wodurch das Schweißpulver im Pulvergehäuse in ausreichender Menge und für den Schweißvorgang mit ausreichender Zeit gehalten werden kann.

Auch durch Unterstützung von Dichtelementen kann das Pulvergehäuse mit dem im Inneren herrschenden Unterdruck an das zu bearbeitende werkstück heran gedrückt und daran gehalten werden. Schweißpulver kann so nicht austreten und nutzlos verloren gehen. Treten Undichtheiten auf, erhöht sich der Innendruck im Pulvergehäuse. Dies kann mit einem Sensor überwacht werden. Wird ein Druckanstieg im Pulvergehäuse detektiert, kann die Vorrichtung sofort außer Betrieb genommen werden, so dass Schweißpulververluste ebenso vermieden werden können, wie auch Schweißfehler.

Die Förderung von Schweißpulver kann allein mit dem wirkenden Unterdruck erfolgen. Es kann aber vorteilhaft sein, die Förderung aus dem Pulvervorratsbehälter mit komprimiertem Gas zumindest zu unterstützen. Ein solches Gas kann dem Pulvervorratsbehälter zugeführt und mit dessen Hilfe über die Pulverzuführleitung zum Pulvergehäuse transportiert werden. Bevorzugt kann hierfür ein inertes oder Schutzgas eingesetzt werden, mit dem die Schweißqualität weiter verbessert werden kann.

Bei der Förderung von Schweißpulver in das Pulvergehäuse und der Abfuhr von Schweißpulver aus dem Pulvergehäuse sollte gesichert werden, dass innerhalb des Pulvergehäuses Schweißpulver in ausreichendem Maß enthalten ist, so dass das Pulvergehäuse so gefüllt ist, dass ein Schweißen unter Pulver in der jeweiligen Schweißposition erfolgen kann. Dies kann beispielsweise durch die Verwendung einer im Durchmesser gegenüber der Pulverabführleitung größeren Pulverzuführungsleitung und/oder über eine Überwachung des Füllstandes des Pulvers erfolgen.

Nachfolgend soll die Erfindung beispielhaft näher erläutert werden.
Dabei zeigen:
Figur 1 in schematischer Form den prinzipiellen Aufbau eines Beispiels einer erfindungsgemäßen Vorrichtung und
Figur 2 einen Schnitt durch ein an einer erfindungsgemäßen Vorrichtung einsetzbaren Pulvergehäuse.

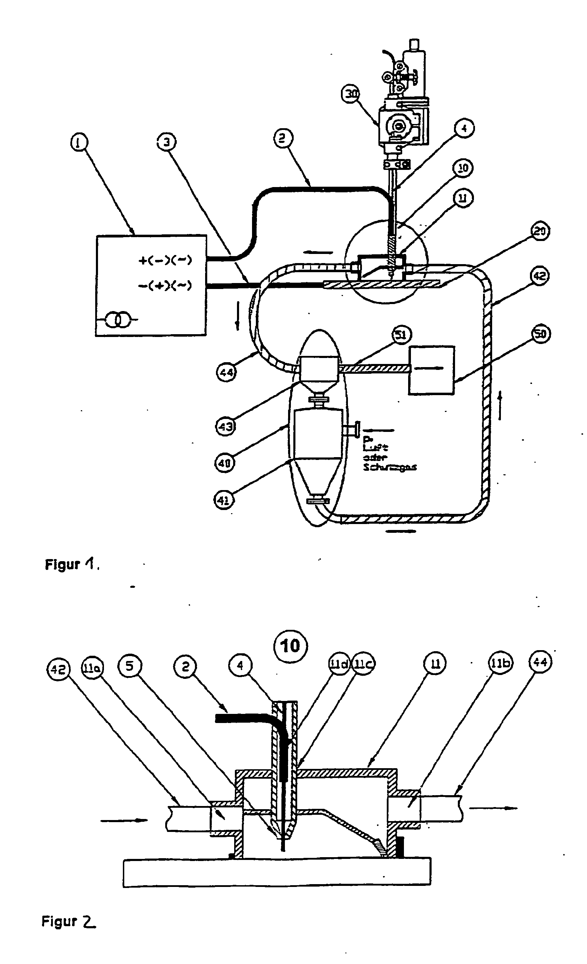

Bei dem in Figur 1 gezeigten Beispiel einer erfindungsgemäßen Vorrichtung ist eine Schweißstromquelle 1 über eine elektrische Leitung 2 mit dem Schweißkopf 10 und eine elektrische Leitung 3 mit dem Werkstück 20 verbunden. Der Schweißdraht als Schweißelektrode 4 wird mit Hilfe eines Drahtvorschubgeräts 30 dem Schweißkopf zugeführt.

Das Schweißpulver befindet sich in einem Pulvervorratsbehälter 41, der mit einer bevorzugt flexiblen Pulverzuführleitung (z.B. Schlauch) 42 mit dem Schweißkopf 10 verbunden ist. Der Pulverauffangbehälter 43 ist mit einer ebenfalls bevorzugt flexiblen Pulverabführleitung (z.B. ebenfalls ein Schlauch) 44 mit dem Pulvergehäuse 11 verbunden. Weiterhin ist gemäß der Erfindung der Pulverauffangbehälter 43 mit einem Schlauch 51 mit einer einen Unterdruck erzeugenden Einheit, z.B. einem Industriestaubsauger 50 verbunden. Der Pulvervorratsbehälter 41 und der Pulverauffangbehälter 43 können sich gemeinsam in einem Pulverbehälter 40 befinden. Als Unterdruck erzeugende Einheiten können aber auch andere geeignete Aggregate, wie z.B. Radialverdichter, Vakuumturbine oder die Nutzung des Injektorprinzips eingesetzt werden.

Am Schweißkopf 10 ist ein aus hitzeresistentem Material bestehendes Pulvergehäuse 11 vorhanden, das mit einer Öffnung und Anschluss 11a für Pulverzuführleitung 42 für die Pulverzufuhr, einer Öffnung und Anschluss 11b für die Pulverabführleitung 44 für die Pulverrückfuhr, einer Öffnung 11c für den Schweißdraht, als Schweißelektrode 4 und einer Öffnung 11d für die elektrische Leitung 2 versehen ist.

Die Stromübertragung von der elektrischen Leitung 2 auf den Schweißdraht 4 erfolgt über eine Stromkontaktdüse 5.

Zum Schweißen wird das Pulvergehäuse 11 auf das zu schweißende Werkstück 20 aufgesetzt. Der Industriestaubsauger 50 erzeugt im Pulverauffangbehälter 43 einen Unterdruck. Dadurch stellt sich im Pulvergehäuse 11 ebenfalls ein Unterdruck ein, also ein Druck, der kleiner ist als der Umgebungsdruck, der auch im Pulvervorratsbehälter 41 herrscht. Bei Anschluss eines zusätzlichen Schutzgases kann im Pulvervorratsbehälter 41 ein höherer Druck als der Umgebunsdruck herrschen, der dann größer als der Druck im Pulvergehäuse 11 und der wiederum größer als der Druck im Pulverauffangbehälter 43 ist.

Durch einen Unterdruck gegenüber der Umgebung kann sich das Pulvergehäuse 11 an das Werkstück 20 ansaugen. Die Abdichtung zwischen dem Pulvergehäuse 11 erfolgt hier an den thermisch weniger belasteten Seiten vor und neben der Schweißnaht mit Gummi- oder Kunststoffprofilen, an der thermisch stärker belasteten Seite mit Metallprofilen oder Drahtbürsten. Diese Dichtelemente sind an den in Richtung Werkstück weisenden Stirnflächen des Pulvergehäuses 11 angeordnet oder dort daran ausgebildet.

Die Druckdifferenz zwischen dem Pulvervorratsbehälter 41, dem Pulvergehäuse 11 und dem Pulverauffangbehälter 43 erzeugt eine Strömung, die das Schweißpulver vom Pulvervorratsbehälter 41 über die Pulverzuführungsleitung 41 zum Pulvergehäuse 11 und vom Pulvergehäuse 11 über die Pulverabführleitung 44 zum Pulverauffangbehälter 43 transportiert. So wird das Schweißpulver dem Pulvergehäuse 11 des Schweißkopfes 10 kontinuierlich zugeführt. Das Schweißen wird dann durch den Vorschub des Schweißdrahtes bei eingeschalteter Schweißstromquelle 1 in Gang gesetzt. Dabei brennt der Lichtbogen zwischen dem abschmelzenden Schweißdraht 4 und dem Werkstück 20. Der Lichtbogen wird durch das kontinuierlich zugeführte Schweißpulver, das teilweise aufschmilzt, abgedeckt und vor der Umgebungsluft geschützt. Nicht aufgeschmolzenes Schweißpulver wird durch die Strömung wieder in den Pulverauffangbehälter 43 transportiert.

Der Druck im Inneren des Pulvergehäuses 11 wird mit einem Drucksensor (nicht dargestellt) überwacht. Steigt er über einen kritischen Wert, ist dies ein Zeichen für eine unzureichende Abdichtung zwischen Pulvergehäuse 11 und Werkstück 20, in diesem Fall wird die Saugleistung angepasst. Reicht die Saugleistung nicht mehr aus, um einen ausreichenden Unterdruck zu erzeugen, wird der Prozess unterbrochen, um Schweißfehler zu vermeiden. Bevorzugt kann hierfür ein Differenzdrucksensor eingesetzt werden. Für diesen Fall darf der Differenzdruck zwischen Umgebung und dem im Pulvergehäuse 11 bestimmten Druck einen kritischen Wert nicht unterschreiten.

Mit der Erfindung kann in allen Schweißpositionen Unterpulver geschweißt werden. Verluste an Schweißpulver werden reduziert. Wird das Pulvergehäuse 11 des Schweißkopfes 10 vom Werkstück 20 entfernt, wird der Pulvertransport wegen des Wegfalls der Druckdifferenz zwischen Pulvervorratsbehälter 41 und Pulvergehäuse 11 von selbst sofort unterbrochen. Somit treten keine Verluste an Schweißpulver bei fehlendem Werkstück 20 auf.

Das Pulvergehäuse 11 soll in Vorschubachsrichtung in seinem Inneren länger als in der senkrecht dazu ausgerichteten Richtung sein. Es kann dabei in Vorschubachsrichtung eine Länge im Bereich 150 mm bis 350 mm, in der senkrecht dazu ausgerichteten Achsrichtung zwischen 100 mm bis 250 mm breit sein. Die Höhe im Inneren kann im Bereich 100 mm bis 250 mm gehalten werden, so dass das Innenvolumen an verschiedene Bearbeitungsvorgaben anpassbar ist.

Der Innendruck sollte beim Schweißen im Bereich 0,1 bis 0,9 bar also zwischen 0,9 bar bis 0,1 bar unterhalb des Umgebungsdrucks gehalten werden.

Der Abstand des Anschlusses 11b für die Pulverabführleitung zur Werkstückoberfläche sollte größer als der des Anschlusses 11a für die Pulverzuführleitung.

In nicht dargestellter Form kann das Pulvergehäuse mit einem Manipulator, z.B. einem Industrieroboter bewegt werden, um einen Vorschub bei der Bearbeitung zu realisieren.

## Patentansprüche

1. Vorrichtung zum Unterpulverschweißen mit Lichtbogen mit einem Pulverauffangbehälter (43), einem Pulvervorratsbehälter (41), einem Schweißkopf (10) und einem Pulvergehäuse (11), wobei ein Teil des Schweißkopfes (10) mit Schweißelektrode (4) innerhalb des Pulvergehäuses (11) angeordnet sind,
dabei das ansonsten geschlossene Pulvergehäuse (11) an der zum Werkstück (20) weisenden Seite offen ist und am Pulvergehäuse (11) eine Pulverzuführleitung (42) angeschlossen ist,
**dadurch gekennzeichnet, dass**
am Pulvergehäuse (11) eine Pulverabführleitung (44) angeschlossen ist, und die Pulverabführleitung (44) zu dem Pulverauffangbehälter (43) geführt ist, der mit dem Pulvervorratsbehälter (41) verbunden und an den die Pulverzuführleitung (42) angeschlossen ist,
wobei der Pulverauffangbehälter (43) mit einer einen Unterdruck erzeugenden Einheit (50) durch einen Schlauch (51) verbunden ist.

2. Vorrichtung nach Anspruch 1, **dadurch gekennzeichnet, dass** die Anschlüsse (11a, 11b) von Pulverzuführleitung (42) und Pulverabführleitung (44) sich diametral gegenüberliegend am Pulvergehäuse (11) angeordnet sind.

3. Vorrichtung nach einem der vorhergehenden Ansprüche, **dadurch gekennzeichnet, dass** an in Richtung Werkstück weisenden Stirnflächen des Pulvergehäuses (11) Dichtelemente vorhanden sind.

4. Vorrichtung nach einem der vorhergehenden Ansprüche, **dadurch gekennzeichnet, dass** im Pulvergehäuse (11) ein Drucksensor angeordnet ist.

5. Vorrichtung nach Anspruch 5, **dadurch gekennzeichnet, dass** der Drucksensor ein Differenzdrucksensor ist.

6. Vorrichtung nach einem der vorhergehenden Ansprüche, **dadurch gekennzeichnet, dass** am Pulvervorratsbehälter (41) ein Anschluss (41a) für ein zusätzliches Gas zur Pulverförderung vorhanden ist.

7. Vorrichtung nach einem der vorhergehenden Ansprüche, **dadurch gekennzeichnet, dass** das Pulvergehäuse (11) in Vorschubachsrichtung im Inneren länger ist als es senkrecht zur Vorschubachsrichtung breit ist.

8. Vorrichtung nach einem der vorhergehenden Ansprüche, **dadurch gekennzeichnet, dass** der Anschluss (11b) für die Pulverabführleitung (44) einen größeren Abstand zur Werkstückoberfläche aufweist, als der Anschluss (11a) für die Pulverzuführleitung (42).

9. Verfahren zum Unterpulverschweißen mit Lichtbogen, bei dem Schweißpulver an einen Bearbeitungsbereich in ein Pulvergehäuse (11) zugeführt wird, **dadurch gekennzeichnet, dass** überschüssiges Schweißpulver mittels Unterdruck aus dem Pulvergehäuse (11) in einen Pulverauffangbehälter (43) abgeführt wird, wobei der Unterdruck mit einer einen Unterdruck erzeugenden Einheit (50) erzeugt wird, wobei die einen Unterdruck erzeugende Einheit (50) mit dem Pulverauffangbehälter (43) durch einen Schlauch verbunden ist, so dass
der Druck im Inneren des Pulvergehäuses (11) größer, als der Druck im Pulverauffangbehälter (43) gehalten wird.

10. Verfahren nach Anspruch 8 oder 9, **dadurch gekennzeichnet, dass** im Pulvergehäuse (11) ein Druck, der 0,1 bis 0,9 bar kleiner als der Umgebungsdruck ist, eingestellt wird.

11. Verfahren nach einem der Ansprüche 8 bis 10, **dadurch gekennzeichnet, dass** der Druck im Inneren des Pulvergehäuses (11) kleiner, als der Druck im Pulvervorratsbehälter (41) gehalten wird.

12. Verfahren nach einem der Ansprüche 8 bis 11, **dadurch gekennzeichnet, dass** der Druck im Inneren des Pulvergehäuses (11) bestimmt, der jeweilige bestimmte Druck für die Regelung der den Unterdruck erzeugenden Einheit (50) und/oder die Abschaltung des Schweißprozesses genutzt wird.

13. Verfahren nach einem der Ansprüche 8 bis 12, **dadurch gekennzeichnet, dass** für die Pulverförderung zum Pulvergehäuse (11) ein komprimiertes inertes Gas eingesetzt wird.

## Claims

1. Apparatus for submerged arc welding with a powder collecting container (43), a powder storage container (41), a welding head (10) and a powder housing (11), a part of the welding head (10) with welding electrode (4) being arranged inside the powder housing (11),
the otherwise closed powder housing (11) being open at the side facing the workpiece (20) and a powder supply line (42) being connected to the powder housing (11),
**characterised in that**
a powder discharge line (44) is connected to the powder housing (11), and the powder discharge line (44) is led to the powder collecting container (43), which is connected to the powder storage container (41) and to which the powder supply line (42) is connected,
the powder collecting container (43) being connected to a negative-pressure-generating unit (50) by a tube (51).

2. Apparatus according to Claim 1, **characterised in that** the connections (11a, 11b) of powder supply line (42) and powder discharge line (44) are arranged diametrically opposite one another on the powder housing (11).

3. Apparatus according to one of the preceding claims, **characterised in that** sealing elements are present at end faces of the powder housing (11) which face in the direction of the workpiece.

4. Apparatus according to one of the preceding claims, **characterised in that** a pressure sensor is arranged in the powder housing (11).

5. Apparatus according to Claim 5, **characterised in that** the pressure sensor is a differential pressure sensor.

6. Apparatus according to one of the preceding claims, **characterised in that** a connection (41a) for an additional gas for powder conveyance is present on the powder storage container (41).

7. Apparatus according to one of the preceding claims, **characterised in that** the powder housing (11) is longer in the interior in the feed axis direction than it is wide perpendicular to the feed axis direction.

8. Apparatus according to one of the preceding claims, **characterised in that** the connection (11b) for the powder discharge line (44) is at a greater distance from the workpiece surface than the connection (11a) for the powder supply line (42).

9. Method for submerged arc welding, in which welding powder is supplied into a powder housing (11) at a working region, **characterised in that** excess welding powder is discharged from the powder housing (11) into a powder collecting container (43) by means of negative pressure, the negative pressure being generated by a negative-pressure-generating unit (50), the negative-pressure-generating unit (50) being connected to the powder collecting container (43) by a tube, so that the pressure in the interior of the powder housing (11) is kept higher than the pressure in the powder collecting container (43).

10. Method according to Claim 8 or 9, **characterised in that** a pressure which is 0.1 to 0.9 bar lower than the ambient pressure is set in the powder housing (11).

11. Method according to one of Claims 8 to 10, **characterised in that** the pressure in the interior of the powder housing (11) is kept lower than the pressure in the powder storage container (41).

12. Method according to one of Claims 8 to 11, **characterised in that** the pressure in the interior of the powder housing (11) is decisive, the particular defined pressure being used to control the negative-pressure-generating unit (50) and/or to cut off the welding process.

13. Method according to one of Claims 8 to 12, **characterised in that** a compressed inert gas is employed for the powder conveyance to the powder housing (11).

## Revendications

1. Dispositif de soudage à l'arc sous flux en poudre avec arc électrique avec un collecteur de poudre (43), un réservoir de poudre (41), une tête de soudage (10) et un carter à poudre (11), dans lequel une partie de la tête de soudage (10) avec l'électrode de soudage (4) est agencée à l'intérieur du carter à poudre (11),
le carter à poudre (11) étant ouvert du côté orienté vers la pièce d'oeuvre (20) et toujours fermé sur les autres côtés, et une conduite d'amenée de la poudre (42) étant raccordée au carter à poudre (11),
**caractérisé en ce que**
une conduite d'évacuation de la poudre (44) est raccordée au carter à poudre (11), et la conduite d'évacuation de la poudre (44) est menée vers le collecteur de poudre (43) qui est relié au réservoir de poudre (41) et auquel est raccordée la conduite d'amenée de la poudre (42),
dans lequel le collecteur de poudre (43) est relié via un tuyau flexible (51) à une unité (50) générant une dépression.

2. Dispositif selon la revendication 1, **caractérisé en ce que** les raccords (11a, 11b) de la conduite d'amenée de la poudre (42) et de la conduite d'évacuation de la poudre (44) sont agencés de manière diamétralement opposée sur le carter à poudre (11).

3. Dispositif selon l'une quelconque des revendications précédentes, **caractérisé en ce que** des éléments d'étanchéité sont prévus sur des faces frontales du carter à poudre (11) orientées en direction de la pièce d'oeuvre.

4. Dispositif selon l'une quelconque des revendications précédentes, **caractérisé en ce qu'**un capteur de pression est agencé dans le carter à poudre (11).

5. Dispositif selon la revendication 5, **caractérisé en ce que** le capteur de pression est un capteur de pression différentielle.

6. Dispositif selon l'une quelconque des revendications précédentes, **caractérisé en ce qu'**un raccord (41a) pour un gaz supplémentaire destiné à transporter la poudre est prévu sur le réservoir de poudre (41).

7. Dispositif selon l'une quelconque des revendications précédentes, **caractérisé en ce que** la longueur intérieure du carter à poudre (11) dans la direction axiale d'acheminement est supérieure à sa largeur transversalement à la direction axiale d'acheminement.

8. Dispositif selon l'une quelconque des revendications précédentes, **caractérisé en ce que** le raccord (11b) pour la conduite d'évacuation de la poudre (44) est situé à une plus grande distance de la surface de la pièce d'oeuvre que le raccord (11a) pour la conduite d'amenée de la poudre (42).

9. Procédé de soudage à l'arc sous flux en poudre avec arc électrique, dans lequel de la poudre de soudage est amenée au niveau d'une zone de travail dans le carter à poudre (11), **caractérisé en ce que** la poudre de soudage excédentaire est évacuée par dépression hors du carter à poudre (11) vers un collecteur de poudre (43), dans lequel la dépression est générée par une unité (50) générant une dépression, dans laquelle l'unité (50) générant une dépression est reliée au collecteur de poudre (43) via un tuyau flexible, de telle sorte que
la pression à l'intérieur du carter à poudre (11) est maintenue supérieure à la pression dans le collecteur de poudre (43).

10. Procédé selon la revendication 8 ou 9, **caractérisé en ce que** la pression réglée dans le carter à poudre (11) est inférieure de 0,1 à 0,9 bar à la pression atmosphérique.

11. Procédé selon l'une quelconque des revendications 8 à 10, **caractérisé en ce que** la pression à l'intérieur du carter à poudre (11) est maintenue inférieure à la pression dans le réservoir de poudre (41).

12. Procédé selon l'une quelconque des revendications 8 à 11, **caractérisé en ce que** la pression à l'intérieur du carter à poudre (11) est déterminée, la pression respectivement déterminée est utilisée pour régler l'unité (50) générant une dépression et/ou arrêter le processus de soudage.

13. Procédé selon l'une quelconque des revendications 8 à 12, **caractérisé en ce qu'**un gaz inerte comprimé est utilisé pour transporter la poudre vers le carter à poudre (11).
